# EUROPÄISCHE PATENTSCHRIFT

(11) **EP 2 193 584 B1**
(45) Veröffentlichungstag und Bekanntmachung des Hinweises auf die Patenterteilung: **15.03.2017**
(21) Anmeldenummer: 08849514.8
(22) Anmeldetag: 30.10.2008
(51) Int. Cl.: H02H 3/02

(54) **KURZSCHLUSSBEGRENZUNGSVORRICHTUNG IN EINER NIEDERSPANNUNGSANLAGE**
SHORT-CIRCUIT LIMITING APPARATUS IN A LOW-VOLTAGE INSTALLATION
DISPOSITIF DE LIMITATION DES COURTS-CIRCUITS DANS UNE INSTALLATION BASSE TENSION

(30) Priorität: 16.11.2007 DE 102007055071
(43) Veröffentlichungstag der Anmeldung: 09.06.2010
(73) Patentinhaber: Eaton Electrical IP GmbH & Co. KG, 12529 Schönefeld (DE)
(72) Erfinder: SCHUMACHER, Andreas, 53547 Dattenberg (DE); TERHOEVEN, Peter, 53347 Alfter (DE)
(74) Vertreter: Eaton IP Group EMEA
(86) Internationale Anmeldenummer: PCT/EP2008/009154
(87) Internationale Veröffentlichungsnummer: WO 2009/062600

(56) Entgegenhaltungen:
- EP-A2- 1 052 665
- WO-A1-01/33685
- WO-A1-02/15361
- GB-A- 1 121 078
- SMITH, DAVID H.,: "Problems Involving Industrial Plant-Utility Power System Interties" IEEE TRANSACTIONS ON INDUSTRY APPLICATIONS, Bd. IA-11, Nr. 6, November 1975 (1975-11), Seiten 636-640, XP002520856 ISSN: 0093-9994

## Beschreibung

Die Erfindung betrifft eine Begrenzungsvorrichtung für Kurzschlüsse in einer Wechselstrom-Niederspannungsanlage mit einem oder mehreren, als Kabel oder Stromschiene ausgebildeten Versorgungssträngen mit Verbrauchern und/oder motorischen Antrieben mit Stromeinspeisepunkten, an denen mit Einspeiseschaltern abgesicherte Stromeinspeiseaggregate angeordnet sind.

Ein solches Schutzsystem einer Niederspannungsanlage kann für Inselanlagen, insbesondere in einem Schiffsbordnetz oder in einem Offshore-Plattform-System, oder für eine über Mittelspannung gespeiste Energieversorgung für industrielle Großverbraucher geeignet sein.

Zu einer sicheren Energieversorgung gehört die Sicherung der Energieeinspeisung als auch die Sicherung der Energieverteilung. Diese Anforderungen werden sowohl an ein Stromschienen-Verteilersystem als auch an ein Kabelsystem gestellt.

Leistungsschalter und ein zugeordnetes Auslösesystem sind daher so eingestellt, dass bei Bedarf nur der Leistungsschalter auslöst, der sich für Fehlerstromabschaltungen unmittelbar vor der Fehlerstelle befindet. Diese Selektivität begrenzt den Bereich (den fehlerhaften Stromkreis), der im Fehlerfall abgeschaltet werden muss, auf ein Minimum. Alle anderen Anlagenteile bleiben in Betrieb. Hierbei müssen die Auslösezeiten von in Reihe geschalteten Schutzeinrichtungen sorgfältig aufeinander abgestimmt werden und Schaltgeräte sowie Verteilungssysteme (Schiene oder Kabel) imstande sein, den Kurzschlussstrom während der Gesamtausschaltzeit des Schaltgerätes, vermehrt um die für die Selektivität erforderliche Verzögerungszeit, zu führen. Man spricht hierbei von selektiver Staffelung der Schutzeinrichtungen.

Schutz- und Selektivitätsforderungen insbesondere in Inselnetzanlagen werden in Klassifikations- und Bauvorschriften von Klassifikationsunternehmen definiert, beispielsweise vom Germanischen Lloyd.

So wird beispielsweise für ein Schiffsbordnetz vorgeschrieben, dass in Anlagen, bei denen die Hauptstromquelle für die Aufrechthaltung des Vortriebs des Schiffes erforderlich ist, die Hauptsammelschiene in mindestens zwei Abschnitte aufgeteilt werden können muss, welche normalerweise durch Schalter oder andere anerkannte Möglichkeiten verbunden sind. Soweit wie möglich sind die Anschlüsse der Generatoren und der angekoppelten Verbraucher gleichmäßig auf die Sammelschienenabschnitte aufzuteilen.

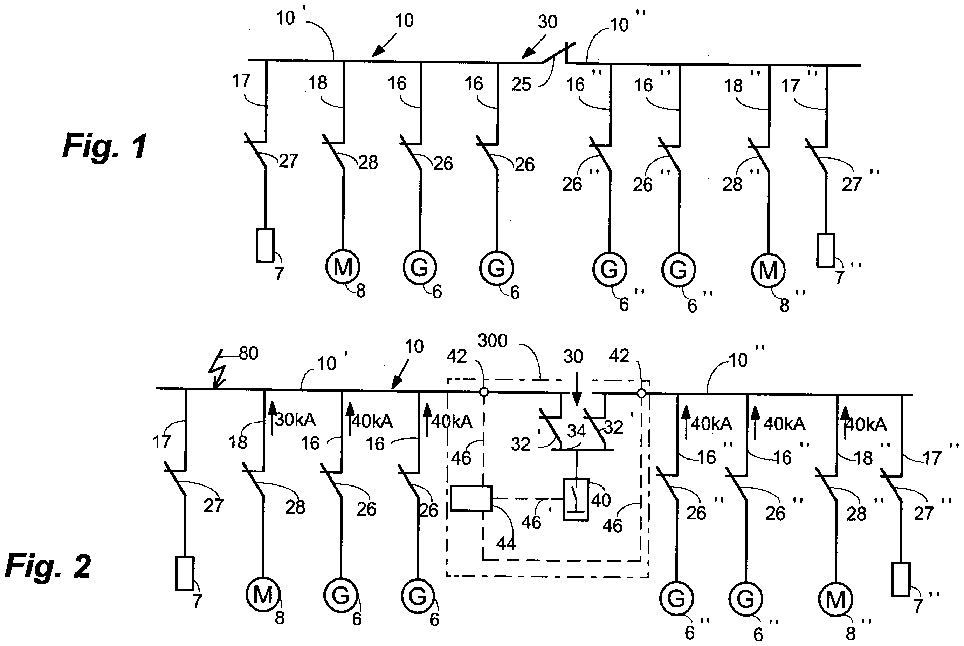

Die Figur 1 zeigt schematisch die Situation einer Niederspannungsanlage mit einer Trennstelle, beispielsweise in einem Bordnetz.

An einem Versorgungsstrang (z.B. Sammelschiene) sind Gruppen von Generatoren, Verbrauchern und motorischen Antrieben angeschaltet. Um mindestens zwei solcher Gruppen elektrisch zu trennen, um sie im Fehlerfall voneinander abzukoppeln, wird eine Trennstelle mit einem Koppelschalter geschaffen. Nach Öffnen des Koppelschalters (im Fehlerfall) sind die beiden Teilabschnitte eines Versorgungsstrangs elektrisch voneinander unabhängig.

Nennströme auf Versorgungssträngen in einem Schiffsbordnetz können Werte von mehr als 8000 A erreichen, was beispielsweise durch den hohen geforderten Energiebedarf bei einem Spannungsniveau von bis zu 690 V AC der Fall ist. Diese hohe Energiedichte bringt Niederspannungsschaltgeräte an den Rand ihrer Leistungsfähigkeit, insbesondere das Kurzschlussausschaltvermögen sei an dieser Stelle als kritische Größe genannt. Besonders der Koppelschalter muss in der Lage sein, Kurzschlussströme von mehr als 100 kA sicher abzuschalten. Konventionelle Leistungsschalter sind mit solchen Anforderungen überfordert, so dass alternative Möglichkeiten zur Kurzschlussstrombegrenzung gesucht werden.

Die extrem hohen Stromstärken bei Kurzschlüssen sind erwähnt worden. Dies bedeutet, dass die stromtragenden Elemente (Kabel und/oder Stromschienen) hierfür ausgelegt sein müssen. Somit müssen diese Elemente entsprechend hohe Leitungsquerschnitte haben. Dies hat zur Konsequenz, dass die Investition in große Leitungsquerschnitte teuer ist, insbesondere bei steigenden Marktpreisen für Kupfer.

Aus solchen Erwägungen wird auch vorgeschlagen, in Inselnetzen von Niederspannung auf Mittelspannung überzugehen. Für Mittelspannung bedeutet dies jedoch aus Sicherheitsgründen, dass die Crew auf einem Inselnetz mit mindestens einem Elektrofachmann verstärkt werden muss.

Schutzsysteme gegen Kurzschlüsse für Niederspannungsanlagen sind schon vorgeschlagen worden, wobei sogar aufwändige System mit supraleitenden Trennschaltern angedacht sind (DE 10349552 A1).

Die vorgetragenen Erwägungen gelten gleichermaßen für die Energieversorgung von industriellen Großverbrauchern, beispielsweise in Automobilfertigungsstraßen. Die Energieverteilung hat dort die Topologie eines Rings (Vollring oder Teilring); die Einspeisung erfolgt von Mittelspannungsniveau über Transformatoren in die Versorgungsstränge.

Die GB 1 121 078 beschreibt einen Schaltungsanordnung zur Begrenzung eines Kurzschlussstroms in einer Kopplungsleitung zwischen Hochspannungsnetzen. Die Kopplungsleitung umfasst zwei in Reihe geschaltete Leistungsschalter. Zwischen die Leistungsschalter ist ein Erdungsschalter geschaltet, der eine Erdung jeder Phase der Kopplungsleitung ermöglicht und von einer durch einen Kurzschlussstrom angeregten Auslöseeinrichtung angesteuert wird. Nach der Erdung der Kopplungsleitung werden die Netze mittels der Leistungsschalter voneinander getrennt.

Es ist die Aufgabe der Erfindung, ein Schutzsystem für die Energieversorgung auf Niederspannungsebene vorzulegen, welches gesteigertem Energiebedarf gerecht wird.

Die Lösung der Aufgabe findet sich im Kennzeichen des Hauptanspruchs, wobei in Unteransprüchen weitere vorteilhafte Ausgestaltungen formuliert sind.

Der Kern der Erfindung besteht darin, dass in der Trennstelle ein mehrphasiger (bei Drehstrom ein dreiphasiger) Schnellkurzschließer mit ausreichender Stromtragfähigkeit für auf den Versorgungssträngen prospektiv auftretenden Kurzschluss-Stromstärken eingebracht ist. Dem Schnellkurzschließer ist zu jedem Teilstrang hin je ein Leistungsschalter in Reihe geschaltet, wobei die Leistungsschalter in ihrer Ausschaltzeit den Einspeiseschaltern übergeordnet sind. Jedem Teilstrang ist je eine Stromerfassungsvorrichtung zugeordnet, und bei Auftreten eines Kurzschlusses in einem der Teilstränge übermittelt die den Kurzschluss erfassende Stromerfassungsvorrichtung ein Auslösesignal an den (die) Schnellkurzschließer, der (die) hiernach eine Kurzschluss-Schaltung in der Trennstelle vornimmt (vornehmen).

Mit der Erfassung und Auslösung der Kurzschluss-Schaltung des Kurzschließers öffnet mindestens einer der beiden Leistungsschalter in der Trennstelle. Im fehlerbehafteten Teilstrang erfahren' die vorhandenen Schutzschalteinrichtungen, insbesondere jene der den Stromeinspeiseaggregaten zugeordneten Einspeiseschalter den Kurzschluss-Strom und trennen den Strompfad der Stromeinspeiseaggregate auf. Durch das Öffnen der in der Trennstelle liegenden Leistungsschalter sind die beiden Teilstränge elektrisch voneinander unabhängig. Im nicht fehlerbehafteten Teilstrang bleibt die Energieversorgung aufrecht, da der Teilabschnitt dort vom Kurzschluss isoliert ist.

Durch den mit dem Kurzschließer erzeugten Parallelkurzschluss wird der Effektivwert des Kurzschluss-Stroms gemindert, da sich der Kurzschluss-Strom auf zwei vorliegende 'Fehlerstellen' aufteilt. Die Wirkung des Kurzschlusses wird in seiner Stärke abgemildert und bezüglich einer betroffenen Zone im Verteilersystem eingegrenzt.

Ein noch zu erwähnender Vorteil der Erfindung liegt darin, dass die vorgesehene Vorrangigkeit (Selektivität) zwischen den Einspeiseschaltern und den Leistungsschaltern in der Trennstelle dazu führt, dass das Kurzschlussausschaltvermögen der Einspeiseschalter reduziert werden kann. Mit anderen Worten, es können Einspeiseschalter mit geringerem Leistungsumfang eingesetzt werden.

In den Unteransprüchen sind weitere vorteilhafte Ausgestaltungen angegeben, die einzeln oder in Kombination miteinander verwirklicht sein können.

Der Schnellkurzschließer kann in einer Koppelschiene eingefügt sein, die die Trennstelle überbrückt. Das bedeutet, dass die Trennstelle mechanisch eine größere Länge hat, als der Abstand der Anschluss-Stromschienen des Schnellkurzschließers. Die Enden der Teilstränge können somit mit Koppelschiene überbrückt werden.

Der Schnellkurzschließer sollte eine ausreichende Stromtragfähigkeit für eine prospektiv zu erwartende Stromstärke eines Kurzschlusses aufweisen. Ansonsten müssen weitere Schnellkurzschließer als Einzelgeräte mit geringerer Stromtragfähigkeit eingesetzt werden, die jeweils parallel geschaltet und beaufschlagt sind. Zwei oder mehr Kurzschließer als Einzelgeräte mit geringerer Stromtragfähigkeit würden den Schaltvorgang dann sicher und schnell ausüben.

Schnellkurzschließer mit den geforderten Eigenschaften sind bekannt. Es sollen hier genannt werden: Kurzschließer über Thyristoren schaltende Kurzschluss-Schalter (DE 4438593 A1) oder Schalter vom Typ Vakuumschaltröhre (DE 4404074 A1). Einige Typen von Schnellkurzschließern sind Mehrfach-Kurzschließer, andere wiederum können nur ein einziges Mal betätigt werden (Einmal-Kurzschließer).

Vorzugsweise wird ein Schnellkurzschließer vom Typus eines pyrotechnisch betriebenen Schnellkurzschließers (EP 1052 665 B1 oder WO 2000 62320 A1) vorgeschlagen. Dieser Schnellkurzschließer kann in einer Betätigungszeit von kürzer als 3 ms einen Kurzschluss herbeiführen. Der pyrotechnische Antrieb treibt einen metallischen Bolzen durch den Stapel der Anschluss-Schienen, so dass die Phasen innerhalb der Betätigungszeit untereinander elektrisch und mechanisch kontaktiert werden und ein Kurzschluss erzeugt wird. Pyrotechnisch betriebene Schnellkurzschließer sind Einmal-Kurzschließer, die nach einem Schaltvorgang ausgewechselt werden müssen. In einer Niederspannungsanlage kann die Demontage des betätigten Einmal-Kurzschließers und die Montage eines neuen Schnellkurzschließers von einer elektrotechnisch unterwiesenen Person vorgenommen werden.

Die Erfassungsschwelle der Stromerfassungsvorrichtung soll einstellbar sein, wobei die Erfassungsschwelle auf das 2fache oder das 4fache des Nennstroms eingestellt sein kann. Als Stromerfassungsvorrichtung wird ein Stromwandler vorgeschlagen.

Die Versorgungsstränge der Niederspannungsanlage können als Kabel und/oder als Stromschiene ausgebildet sein.

Die Stromeinspeiseaggregate können Generatoren und/oder Transformatoren sein.

Das Niederspannungs-Versorgungssystem kann ein Inselsystem sein, insbesondere ein Schiffsbordnetz oder ein Offshore-Plattform-System sein.

Die Versorgungsstränge des Versorgungssystems können lineare oder ringförmige Topologie haben.

Der im Kurzschlussfall in der Trennstelle geschaltete Leistungsschalter soll elektronisch ansteuerbar und verriegelbar sein, so dass sein Wiedereinschalten nicht möglich ist, solange der betätigte und möglicherweise nicht erneut betätigbarer Schnellkurzschließer noch installiert ist. Es entsteht damit Schutz für erneutes (unbeabsichtigtes) Wiedereinschalten auf den vorhandenen Kurzschluss.

Das Spannungsniveau der Niederspannungsanlage, in der die erfindungsgemäße Anordnung eingesetzt werden soll, kann beispielsweise 400 oder 690 V betragen.

Die Erfindung wird in den Figuren näher dargestellt, welche im Einzelnen zeigen:
- Fig. 1:: Schema einer Niederspannungsschaltanlage mit einem Koppelschalter in einer Trennstelle (als Stand der Technik),
- Fig. 2:: Schaltanlage mit Vorrichtung zur Begrenzung und Abschaltung von Kurzschluss-Strömen und
- Fig. 3:: schematische Darstellung einer Energieversorgung für industrielle Großverbraucher.

Die Figur 1 zeigt schematisch eine Niederspannungsschaltanlage mit einem Koppelschalter in einer Trennstelle, beispielsweise eine Niederspannungsanlage in einem Bordnetz.

Es ist ein als Sammelschiene ausgebildeter Versorgungsstrang 10 dargestellt, an der Stromeinspeiseaggregate (z.B. dieselgetriebene Generatoren) 6, Verbraucher 7 und motorischen Antriebe 8 angeschaltet sind. Die Generatoren liefern die elektrische Energie, welche bei den Verbrauchern und motorischen Antrieben eingespeist wird. Um mindestens zwei solcher Gruppen elektrisch zu trennen, um sie entweder unabhängig zu betreiben oder sie im Fehlerfall voneinander abzukoppeln, wird ein Koppelschalter 25 in den Versorgungsstrang 10 gelegt, wodurch eine Trennstelle 30 geschaffen wird. Die Trennstelle 30 wird möglich so gelegt, dass Stromeinspeiseaggregate und motorische Antriebe in ihrer Zahl symmetrisch zur Trennstelle liegen: in Fig. 1 und 2 dargestellt durch je zwei Generatoren und je einem motorischen Antrieb beiderseits der Trennstelle. Nach Öffnen des Koppelschalters 25 sind die beiden Versorgungs-Teilstränge 10', 10" elektrisch voneinander unabhängig. Der Koppelschalter 25 muss ein besonders hohes Kurzschluss-Ausschaltvermögen aufweisen, um effektiv im Fehlerfall wirksam zu sein.

Steigende Anforderungen in elektrischer Leistung in einem Versorgungssystem 10 kann zu einer 'Überforderung' der Leistungsfähigkeit des Koppelschalters 25 führen. Hier setzt die Erfindung an, welche in den weiteren Figuren dargestellt ist. Im Versorgungsstrang 10 ist eine Trennstelle 30 eingefügt, die etwa der Lage des Koppelschalters 25 in Fig. 1 entspricht. Ein besonderer Koppelschalter wird jedoch in der erfindungsgemäßen Anordnung nicht verwendet, da mit der Erfindung eine Verbesserung des Schutzsystems vorgeschlagen werden soll und statt besonderem Koppelschalter zwei konventionelle Leistungsschalter 32',32" eingesetzt werden.

Wie in Fig. 1 sind an den Versorgungssträngen 10', 10" über entsprechende Strompfade 16, 17, 18 mehrere elektrische Aggregate (Generatoren 6, motorische Antriebe 8, Verbraucher 7) angebunden und über Leistungsschalter 26, 27, 28 abgesichert. Die Bezugszeichen der Aggregate des Sammelschienenabschnitts 10" sind mit Doppelstrich versehen.

Der im Strompfad 34 liegende Schnellkurzschließer 40 ist beiderseits über konventionelle Leistungsschalter 32', 32" gegen die beiden Sammelschienenabschnitte 10', 10" abgesichert. Der Strom über den Versorgungsstrang (Sammelschiene 10, bzw. über deren Teilabschnitte 10', 10") wird von Stromsensoren (beispielsweise magnetische Wandler oder Hallsensor) 42 überwacht. Die Erfassungsschwelle der Stromsensoren ist einstellbar und sollte auf ein Mehrfaches des Nennstroms eingestellt sein. Die Anordnung von Schnellkurzschließer mit in Reihe liegenden Leistungsschaltern und die Verschaltung mit Stromerfassungsvorrichtungen (42,44,46) soll kurz 'Kurzschließer-Trenner-Kombination' 300 genannt werden.

Die Ausschaltzeiten der Leistungsschalter 32', 32" sollten im Bereich 150 bis 200 ms liegen; die Ausschaltzeiten der die Stromeinspeiseaggregate (Generatoren 6) absichernden Einspeiseschalter 26 sollen im Bereich 300 bis 500 ms liegen und die Ausschaltzeiten der den motorischen Antrieben 8 vorgelagerten Abgangsschalter 28 sollten im Bereich kürzer als 100 ms liegen. Das Wesentliche für die Erfindung besteht darin, dass die Selektivität der beteiligten Schalter so definiert ist, dass drei Zeitbereiche für die Ausschaltzeiten vorliegen, die sich nicht überlappen, bzw. deren Grenzen möglichst nicht nahe beieinander liegen.

Zur Erläuterung der Erfindung sollen in Figur 2 die Schalter 26, 27, 28, 32', 32" geschlossen sein und die Niederspannungsanlage unter Spannung stehen. In dieser Situation soll ein Kurzschluss 80 (in Teilabschnitt 10') auftreten. Dies kann ein Störlichtbogen oder ein sonstiger Kurzschluss sein. Von den Generatoren und den motorischen Antrieben, die im Kurzschluss-Fall als Generatoren arbeiten, wird Strom in den Versorgungsstrang 10 eingespeist. Die Angabe der Stromstärken an den Strompfeilen von 30, bzw. 40 kA sind typische Kurzschluss-Strom-Werte. Bei typischen Niederspannungsanlagen mit mehreren Generatoren und mehreren motorischen Antrieben können sich die Effektivwerte der Kurzschluss-Ströme in dem Versorgungsstrang auf über 100 kA, in kritischen Fällen bis zu 200 kA addieren.

Die gesamte Kurzschluss-Situation wird von den Stromsensoren 42 erfasst, da der Fehlerstrom über der voreinstellbaren Schwelle, beispielsweise 2facher Nennstrom, liegt. Die Stromsensoren 42 übermitteln über eine Datenleitung ein Erfassungssignal 46' an eine elektronische Zentraleinheit 44, die daraufhin ein Auslösesignal 46" an den Schnellkurzschließer 40 abgibt. Durch den erzwungenen metallischen (galvanischen) Kurzschluss des Kurzschließers öffnet im Strompfad 34 insbesondere der Leistungsschalter 32" schneller als alle Einspeiseschalter 26.

Durch die schnelle Unterbrechung des von den Generatoren 6" und Motoren 8" stammenden Stromstosses durch Öffnen des Leistungsschalters 32" ist die Dauer der Kurzschluss-Strombelastung im Teilstrang 10" nicht lang genug, um die Einspeiseschalter 26" ansprechen zu lassen.

Die Selektivität der Schalter (32',32",26,26") ist zuvor schon angesprochen worden. Die Ausschaltzeit der Leistungsschalter (32',32") in der Trennstelle ist kürzer als die der nachgeordneten Einspeiseschalter 26, 26". Der Einspeiseschalter 26 öffnen nachrangig und trennt nunmehr nur den kurzschlussbehafteten Teilstrang 10' von den einspeisenden Aggregaten (6).

Der rechte Teilstrang 10" ist vom Kurzschluss 80 (im linken Teilstrang) nicht mehr betroffen und der nicht fehlerbehaftete Teilstrang 10" arbeitet unverändert weiter. Der Kurzschluss führt nicht zum Zusammenbruch des Gesamtbetriebs am Versorgungsstrang 10. Ein Teilbetrieb kann aufrecht erhalten werden, wesentliche mit Energie zu versorgende Systeme erleiden keinen Schaden. Beispielsweise heißt dies für ein Schiffsbordnetz, dass Antriebs- und Steuersysteme oder Kühlaggregate für Container nicht von einem Totalausfall betroffen sind, und (zumindest) Teile solcher Systeme bis zur Behebung des Fehlers in Funktion bleiben.

Nach der Schnellabschaltung muss eine Fehlersuche stattfinden, bei der sich herausstellt, wo und wodurch der Fehler aufgetreten ist. Nach Beheben des Fehlers und Austausch des betätigten Schnellkurzschließers gegen einen funktionstüchtigen Schnellkurzschließer kann im Versorgungssystem die Spannung wieder hochgefahren werden.

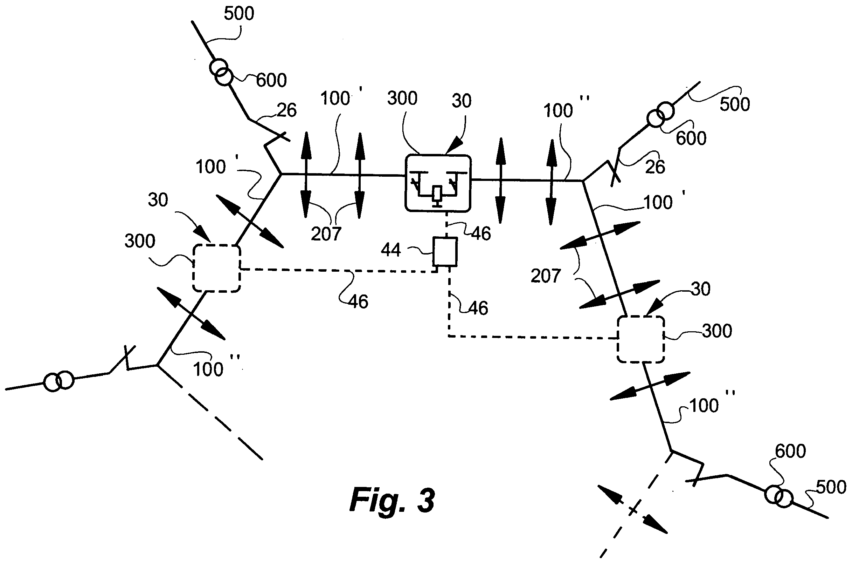

Die Fig. 3 zeigt eine Energieversorgung in Form eines Rings (Vollring oder Teilring) für industrielle Großverbraucher, beispielsweise in Automobilfertigungsstraßen. Das Spannungsniveau der Verbraucher 207 ist Niederspannung; die Einspeisung erfolgt von Mittelspannungsniveau 500 über Transformatoren 600 in die Versorgungsstränge (100',100"). Die erfindungsgemäße Begrenzungsvorrichtung wird an diesem Beispiel erläutert, in dem ein Versorgungssystem mit mehr als einer Trennstelle 30 notwendig ist.

Die Transformatoren 600 sind über Einspeise-Leistungsschalter 26 vom Ringssystem trennbar. Jeder Versorgungsstrang zwischen zwei Einspeisestellen ist in zwei Abschnitte 100',100" geteilt. Die Trennstellen 30 werden von Kurzschließer-Trenner-Kombinationen 300 (einschließlich der Stromsensoren 42) eingenommen: in Fig. 2 schon angesprochen. Wie im linearen System (Fig. 2) ist jedem Versorgungsteilstrang 100', 100" eine Stromerfassungseinrichtung 42 zugeordnet. Die Meldeleitungen der Stromerfassungseinrichtung 42 laufen in einer Zentraleinheit zusammen (Leitungen 46), von wo aus die Kurzschließer 40 der Kombinationen 300 beaufschlagt werden können.

Der Erfassung eines Kurzschlusses und die Funktionalität der Kurzschließer-Trenner-Kombinationen 300 in einem Ringsystem gemäß Fig. 3 entspricht den Abläufen in einem linearen System, wie in Fig. 2 dargestellt. Durch die Geschwindigkeit der Erfassung und der gewollten schnellen Trennung der Teilstränge, wird auf eine Erfassung der Lage der Kurzschlusses verzichtet. Alle Trenner-Kombinationen 300 agieren gleichzeitig, so dass alle Trennstellen 30 gemeinsam öffnen. Aufwändig - jedoch wahrscheinlich auch zu langsam - wäre der Einsatz eines Systems zu Ermittlung der Ortung des Kurzschlusses, beispielsweise durch Ermittlung der Stromrichtung des Kurzschluss-Stroms. Der Vorteil des Einsatzes der vorliegenden Erfindung überwiegt dem Aufwand, der mit der Auffrischung der Aktivierung (z.B. Austausch von Einmal-Kurzschließern) der Schnellkurzschließer verbunden wäre.

### Liste der Bezugszeichen

- 6, 600: Einspeiseaggregat (Generator, Transformator)
- 7, 207: Verbraucher
- 8: motorischer Antrieb
- 10, 100: Versorgungsstrang (Kabel, Sammelschiene)
10' 10" 100', 100" Strangabschnitte
- 16, 17, 18: Strom pfade
- 26, 26": Einspeiseschalter
- 25: Koppelschalter
- 27: Schutzschalter
- 28: Motorschutzschalter
- 30: Trennstelle
- 31: Koppelschiene
- 32' 32": Leistungsschalter
- 34: Strompfad oder Koppelschiene
- 40: Schnellkurzschließer
- 42: Stromsensor
- 44: Zentraleinheit
- 46: Erfassungssignal auf Datenleitung
- 46': Auslösesignal
- 80: Kurzschluss
- 300: Kurzschließer-Trenner-Kombination
- 500: Mittelspannung

## Patentansprüche

1. Vorrichtung zur Begrenzung eines Kurzschluss-Stroms in einer Wechselstrom-Niederspannungsanlage mit einem oder mehreren Versorgungssträngen (10,100) mit Stromeinspeisepunkten, an denen Stromeinspeiseaggregate (6, 60) angeordnet sind, wobei die Versorgungsstränge (10,100) im Kurzschluss-Fehlerfall in einer Trennstelle (30) auftrennbar sind, so dass zwei Teilstränge (10', 10", 100', 100") entstehen, in denen mindestens je ein Stromeinspeiseaggregat (6, 60) vorhanden ist, und wobei in der Trennstelle (30) ein mehrphasiger Schnellkurzschließer (40) mit ausreichender Stromtragfähigkeit für auf den Versorgungssträngen (10,100) prospektiv auftretenden Kurzschluss-Stromstärken eingebracht ist, und wobei dem Schnellkurzschließer (40) zu jedem Teilstrang (10',10",100',100") hin je ein Leistungsschalter (32',32") in Reihe geschaltet ist, und jedem Teilstrang (10',10",100',100") je eine Stromerfassungsvorrichtung (42) zugeordnet ist, und bei Auftreten eines Kurzschlusses (80) in einem der Teilstränge (10',10",100',100") die den Kurzschluss (80) erfassende Stromerfassungsvorrichtung (42) ein Auslösesignal (46) an den oder die Schnellkurzschließer (40) übermittelt, der oder die hiernach eine Kurzschluss-Schaltung in der Trennstelle (30) vornimmt/vornehmen **dadurch gekennzeichnet, dass**
- die Stromeinspeiseaggregate (6, 60) mit Einspeiseschaltern (26, 26") abgesichert sind,
- die Leistungsschalter (32',32") eine Ausschaltzeit aufweisen, die kürzer ist als die der Einspeiseschalter (26',26")
- mittels des Schnellkurzschliessers (40), Phasen des
Versorgungsstrangs (10,100) untereinander kontaktiert werden

2. Begrenzungsvorrichtung nach Anspruch 1 , **dadurch gekennzeichnet, dass** mehrere Schnellkurzschließer (40) parallel vorhanden sind, womit eine ausreichende Stromtragfähigkeit für eine prospektiv zu erwartende Stromstärke eines Kurzschlusses (80) erreichbar ist.

3. Begrenzungsvorrichtung nach einem der vorhergehenden Ansprüche, **dadurch gekennzeichnet, dass** die Versorgungsstränge (10,100) als Kabel und/oder als Stromschiene ausgebildet sind.

4. Begrenzungsvorrichtung nach einem der vorhergehenden Ansprüche, **dadurch gekennzeichnet, dass** die Stromeinspeiseaggregate Generatoren (6) und/oder Transformatoren (60) sind.

5. Begrenzungsvorrichtung nach einem der vorhergehenden Ansprüche, **dadurch gekennzeichnet, dass** die Versorgungsstränge (10) in einem Inselsystem, insbesondere in einem Schiffsbordnetz oder einem Offshore-Plattform-System liegen.

6. Begrenzungsvorrichtung nach einem der Ansprüche 1 bis 4, **dadurch gekennzeichnet, dass** die Versorgungsstränge (100) ein Ringsystem bilden.

7. Begrenzungsvorrichtung nach einem der vorhergehenden Ansprüche, **dadurch gekennzeichnet, dass** der oder die Schnellkurzschließer (40) Einmal-Kurzschließer sind.

8. Begrenzungsvorrichtung nach Anspruch 7, **dadurch gekennzeichnet, dass** als Schnellkurzschließer ein pyrotechnisch betriebener Schnellkurzschließer (40) eingesetzt ist.

9. Begrenzungsvorrichtung nach einem der vorhergehenden Ansprüche, **dadurch gekennzeichnet, dass** die Erfassungsschwelle der Stromerfassungsvorrichtung (42) einstellbar ist.

10. Begrenzungsvorrichtung nach Anspruch 9, **dadurch gekennzeichnet, dass** die Stromerfassungsvorrichtung (42) auf das 2fache oder das 4fache des Nennstroms eingestellt ist.

11. Begrenzungsvorrichtung nach Anspruch einem der vorhergehenden Ansprüche, **dadurch gekennzeichnet, dass** als Stromerfassungsvorrichtung ein Stromwandler (42) vorhanden ist.

12. Begrenzungsvorrichtung nach einem der vorhergehenden Ansprüche, **dadurch gekennzeichnet, dass** die im Kurzschlussfall in der Trennstelle (30) geschalteten Leistungsschalter (32', 32") elektronisch ansteuerbar und verriegelbar sind, so dass sein Wiedereinschalten nicht möglich ist, solange der betätigte Schnellkurzschließer (40) noch installiert ist.

## Claims

1. Device for limiting a short-circuit current in an alternating-current low-voltage device, comprising one or more supply lines (10, 100) with power-supply points at which power supply units (6, 60) are arranged, wherein the supply lines (10, 100) are separable at an isolating point (30) in response to a short circuit fault, so that two part lines (10', 10", 100', 100") are formed, in which at least one power supply unit (6, 60) is provided and
wherein at the isolating point (30) a polyphase high-speed short-circuiting device (40) is installed with sufficient current carrying capacity for prospective short-circuit current strengths at the supply lines (10, 100), and wherein a circuit breaker (32', 32") is connected in series to the high-speed short-circuiting device (40) to each part line (10', 10", 100', 100"), and a current measuring device (42) is assigned to each part line (10', 10", 100', 100"), and on the occurrence of a short-circuit (80) in one of the part lines (10', 10", 100', 100") the current measuring device (42) detecting the short-circuit (80) transmits a triggering signal (46) to the high-speed short-circuiting device or devices (40) which then performs/perform a short-circuit switching operation at the isolating point (30),
**characterised in that**
- the power supply units (6, 60) are secured by infeed switches (26, 26"),
- the circuit breakers (32', 32") have a switch off time which is shorter than that of the infeed switches (26', 26"),
- by means of the high-speed short-circuiting device (40), phases of the supply line (10, 100) are contacted with one another.

2. Limiting device according to claim 1, **characterised in that** a plurality of high-speed short-circuiting devices (40) are provided in parallel, whereby a sufficient current carrying capacity can be achieved for a prospective current strength of a short-circuit (80).

3. Limiting device according to any one of the preceding claims, **characterised in that** the supply lines (10, 100) are in the form of cables and/or bus bars.

4. Limiting device according to any one of the preceding claims, **characterised in that** the power-supply units are generators (6) and/or transformers (60).

5. Limiting device according to any one of the preceding claims, **characterised in that** the supply lines (10) are arranged in an isolated system, in particular in an electrical system on board a vessel or an offshore platform system.

6. Limiting device according to any one of claims 1 to 4, **characterised in that** the supply lines (100) form a ring system.

7. Limiting device according to any one of the preceding claims, **characterised in that** the high-speed short-circuiting device or devices (40) are one-time short-circuiting devices.

8. Limiting device according to claim 7, **characterised in that** a pyrotechnically operated high-speed short-circuiting device (40) is used as a high-speed short circuiting device.

9. Limiting device according to any one of the preceding claims, **characterised in that** the measuring threshold of the current measuring device (42) is adjustable.

10. Limiting device according to claim 9, **characterised in that** the current measuring device (42) is adjusted to twice or four times the nominal current.

11. Limiting device according to any one of the preceding claims, **characterised in that** a current transformer (42) is provided as a current measuring device.

12. Limiting device according to any one of the preceding claims, **characterised in that** the circuit breakers (32', 32") connected in the isolation point (30) in the event of a short circuit can be controlled electronically and can be locked so that it is not possible to switch it on again, as long as the activated high-speed short circuiting device (40) is still installed.

## Revendications

1. Dispositif servant à limiter un courant de court-circuit dans une installation à courant alternatif basse tension comprenant une ou plusieurs branches d'alimentation (10, 100) avec des points d'injection de courant, au niveau desquels des groupes d'injection de courant (6, 60) sont disposés, dans lequel les branches d'alimentation (10, 100) peuvent être coupées en un emplacement de coupure (30) en cas de dysfonctionnement dû à un court-circuit, de sorte que deux branches partielles (10', 10", 100', 100") se forment, dans lesquelles au moins respectivement un groupe d'injection de courant (6, 60) est présent, et
dans lequel un court-circuiteur rapide (40) multiphasé avec une capacité de charge de courant suffisante pour des intensités de courant de court-circuit apparaissant de manière prospective sur les branches d'alimentation (10, 100) est placé à l'emplacement de coupure (30), et dans lequel respectivement un sectionneur de puissance (32', 32") est monté en série avec le court-circuiteur rapide (40) en direction de chaque branche partielle (10', 10", 100', 100"), et respectivement un dispositif de détection de courant (42) est associé à chaque branche partielle (10', 10", 100', 100"), le dispositif de détection de courant (42) détectant le court-circuit (80) transmet, lors de l'apparition d'un court-circuit (80) dans l'une des branches partielles (10', 10", 100', 100"), un signal de déclenchement (46) au ou aux courts-circuiteurs rapides (40), lequel/lesquels effectue/effectuent immédiatement après un montage en court-circuit à l'emplacement de coupure (30),
**caractérisé en ce**
- **que** les groupes d'injection de courant (6, 60) sont protégés par des commutateurs d'injection (26, 26"),
- **que** les sectionneurs de puissance (32', 32") présentent un temps de mise hors service, qui est plus court que celui des commutateurs d'injection (26', 26"),
- **qu'**au moyen du court-circuiteur rapide (40) des phases de la branche d'alimentation (10, 100) peuvent être mises en contact.

2. Dispositif de limitation selon la revendication 1, **caractérisé en ce que** plusieurs courts-circuiteurs rapides (40) sont présents de manière parallèle, ce qui permet d'atteindre une capacité de charge de courant suffisante pour une intensité de courant, attendue de manière prospective, d'un court-circuit (80).

3. Dispositif de limitation selon l'une quelconque des revendications précédentes, **caractérisé en ce que** les branches d'alimentation (10, 100) sont réalisées sous la forme d'un câble et/ou d'un rail conducteur.

4. Dispositif de limitation selon l'une quelconque des revendications précédentes, **caractérisé en ce que** les groupes d'injection de courant sont des générateurs (6) et/ou des transformateurs (60).

5. Dispositif de limitation selon l'une quelconque des revendications précédentes, **caractérisé en ce que** les branches d'alimentation (10) se trouvent dans un système en îlotage, en particulier dans un réseau de bord de navire ou sur une plate-forme off-shore.

6. Dispositif de limitation selon l'une quelconque des revendications 1 à 4, **caractérisé en ce que** les branches d'alimentation (100) forment un système annulaire.

7. Dispositif de limitation selon l'une quelconque des revendications précédentes, **caractérisé en ce que** le ou les courts-circuiteurs rapides (40) sont des courts-circuiteurs à utilisation unique.

8. Dispositif de limitation selon la revendication 7, **caractérisé en ce qu'**un court-circuiteur rapide fonctionnant par pyrotechnie est utilisé en tant que court-circuiteur rapide.

9. Dispositif de limitation selon l'une quelconque des revendications précédentes, **caractérisé en ce que** le seuil de détection du dispositif de détection de courant (42) peut être réglé.

10. Dispositif de limitation selon la revendication 9, **caractérisé en ce que** le dispositif de détection de courant (42) est réglé sur une valeur égale à 2 fois ou 4 fois le courant nominal.

11. Dispositif de limitation selon l'une quelconque des revendications précédentes, **caractérisé en ce qu'**un transformateur de courant (42) est présent en tant que dispositif de détection de courant.

12. Dispositif de limitation selon l'une quelconque des revendications précédentes, **caractérisé en ce que** les sectionneurs de puissance (32', 32") montés en cas de court-circuit à l'emplacement de coupure (30) peuvent être commandés et verrouillés de manière électronique de sorte qu'une remise en service ne soit pas possible tant que le court-circuiteur rapide (40) actionné est encore installé.
